# EUROPEAN PATENT APPLICATION

(11) **EP 1 482 670 A1**
(43) Date of publication of application: **01.12.2004**
(21) Application number: 03012445.7
(22) Date of filing: 30.05.2003
(51) Int. Cl.: H04L 1/18, H04L 1/00

(54) **A method and receiver for buffering data employing HARQ and two stage matching algorithm with iterative decoding**

(71) Applicant: MATSUSHITA ELECTRIC INDUSTRIAL CO., LTD., Kadoma-shi, Osaka 571-8501 (JP)
(72) Inventor: Wengerter, Christian, 63924 Kleinheubach (DE); Suzuki, Hidetoshi, Yokosuka-shi, Kanagawa 239-0847 (JP)
(74) Representative: Grünecker, Kinkeldey, Stockmair & Schwanhäusser Anwaltssozietät

(57) **Abstract**

A method and receiver for buffering data at the receiver of a packet transmission communication system employing hybrid ARQ types II/III and adaptive coding and modulation schemes, wherein the adaptive coding is performed by a two-stage matching algorithm.

The idea underlying the invention is to jointly perform the second de-rate matching and the iterative decoding operation. As a result, the buffer conventionally needed upon completion of the second de-rate matching operation can be completely omitted, since the de-rate matching operation is included in the iterative decoding process.

## Description

This invention relates to packet transmission communication systems employing link adaptation by hybrid Automatic Repeat reQuest (ARQ) and Adaptive Modulation and Coding (AMC) techniques. A particular application is High Speed Downlink Packet Access (HSDPA) within the 3GPP standard.

A common technique for error detection and correction in packet transmission systems over unreliable channels is called hybrid ARQ, which is a combination of Forward Error Correction (FEC) and ARQ as described for example in S. Lin, D.J. Costello, M.J. Miller, "Automatic-repeat-request error-control schemes," *IEEE Commun. Mag.,* vol. 22, no. 12, pp. 5-17, December 1984.

If an FEC encoded packet is transmitted and the receiver fails to decode the packet correctly (errors are usually checked by a CRC (Cyclic Redundancy Check)), the receiver requests a retransmission of the packet. Generally (and throughout this document), the transmission of additional information is called "retransmission (of a packet)", although this retransmission does not necessarily mean a transmission of the same encoded information, but could also mean the transmission of any information belonging to the packet (e.g. additional redundancy information).

Depending on the information (generally code-bits/symbols), of which the transmission is composed of, and depending on how the receiver processes the information, the following hybrid ARQ schemes are defined:

Type I: If the receiver fails to decode a packet correctly, the information of the encoded packet is discarded and a retransmission is requested. This implies that all transmissions are decoded separately. Generally, retransmissions contain identical information (code-bits/symbols) to the initial transmission.

Type II: If the receiver fails to decode a packet correctly, a retransmission is requested, where the receiver stores the information of the (erroneous received) encoded packet as soft information (soft-bits/symbols). This implies that a soft-buffer is required at the receiver. Retransmissions can be composed out of identical, partly identical or non-identical information (code-bits/symbols) according to the same packet as earlier transmissions. When receiving a retransmission the receiver combines the stored information from the soft-buffer and the currently received information and tries to decode the packet based on the combined information. The receiver can also try to decode the transmission individually, however generally performance increases when combining transmissions.

The combining of transmissions refers to so-called soft-combining, where multiple received code-bits/symbols are likelihood combined and solely received code-bits/symbols are code combined (see e.g. D. Chase, "Code combining: A maximum-likelihood decoding approach for combining an arbitrary number of noisy packets," *IEEE Trans. Commun.,* vol. 33, no. 4, pp. 385-393, May 1985 or B.A. Harvey and S. Wicker, "Packet Combining Systems based on the Viterbi Decoder," *IEEE Trans. Commun.,* vol. 42, no. 2/3/4, pp. 1544-1557, April 1994. Common methods for soft-combining are Maximum Ratio Combining (MRC) of received modulation symbols and log-likelihood-ratio (LLR) combining (LLR combing only works for code-bits).

Type II schemes are more sophisticated than Type I schemes, since the probability for correct reception of a packet increases with the number of received retransmissions. This increase comes at the cost of a required hybrid ARQ soft-buffer at the receiver. This scheme can be used to perform dynamic link adaptation by controlling the amount of information to be retransmitted. E.g. if the receiver detects that decoding has been "almost" successful, it can request only a small piece of information for the next retransmission (smaller number of code-bits/symbols than in previous transmission) to be transmitted. In this case it might happen that it is even theoretically not possible to decode the packet correctly by only considering this retransmission by itself (non-self-decodable retransmissions).

Type III: This is a subset of Type II with the restriction that each transmission must be self-decodable.

This invention is related to Type II and Type III schemes, where the received transmissions are soft-combined.

Adaptive Modulation and Coding (AMC) is a link adaptation technique as known for example from R. Love et al, *High speed downlink packet access performance,* Proc. IEEE VTC 2001-Spring, vol. 3, pp. 2234-2238, May 2001. The principle of AMC is to change the modulation and/or coding format in accordance with variations in the channel conditions. The channel conditions can be estimated e.g. based on feedback from the receiver. In a system with AMC, users in favorable positions e.g. users close to the cell site are typically assigned higher order modulation with higher code rates (e.g. 16-QAM with code rate ¾), while users in unfavorable positions e.g. users close to the cell boundary, are assigned lower order modulation with lower code rates (e.g. 16-QAM with code rate ½). In the following the different combinations of coding rates and modulation schemes will be referred to as Modulation Coding Scheme (MCS) levels. A transmission will be split into Transmission Time Intervals (TTI), where the MCS level could change each TTI. In HSDPA the TTI interval is equal to 2 ms. The main benefits of AMC include that firstly higher data rates are available for users in favorable positions which in turn increases the average throughput of the cell and secondly a reduced interference variation due to link adaptation based on MCS selection instead of controlling the transmit power.

High Speed Downlink Packet Access (HSDPA) is a new technique that is standardized from Release 5 within the 3GPP standardization body. It shall provide higher data rates in the downlink by introducing enhancements to earlier releases. Among other enhancements HSDPA employs the link adaptation techniques Adaptive Modulation and Coding (AMC) and hybrid ARQ Type II/III. This functionality is implemented by a 2-stage rate matching requiring a hybrid ARQ (co-called "virtual IR buffer") soft buffer in the receiver. The 2-stage rate matching comprises two consecutive puncturing (rate matching) entities at the transmitter and accordingly two consecutive de-puncturing (de-rate matching) entities at the receiver.

A detailed description of the respective AMC and hybrid ARQ functionality in HSDPA is given in the 3GPP specifications TS 25.212 v. 5.3.0, December 2002 for the Frequency Division Duplex (FDD) mode and in TS 25.222 v. 5.3.0, December 2002 for Time Division Duplex (TDD) mode.

The following description focuses on the HSDPA FDD mode. However, without loss of generality the same principle applies to the HSDPA TDD mode or any other system including uplink transmission employing a 2-stage rate matching (puncturing approach).

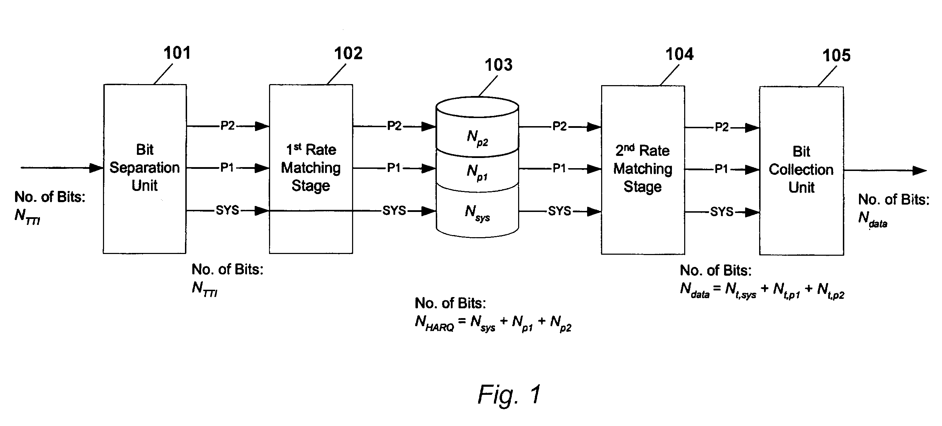

The transmitter implementation is described in the following with reference to figure 1 (see also 3GPP, *Technical specification 25.212; Multiplexing and channel coding (FDD),* v. 5.3.0, December 2002, chapter 4.5.4)

The *N*_{*TTI*} code bits from the Turbo encoder (see for more details, C. Berrou, A. Glavieux, and P. Thitimajshima, "Near Shannon limit error-correcting coding and decoding: Turbo-codes," *Proc. ICC* '93, Geneva, Switzerland, pp. 1064-1070, May 1993) are separated in a bit separation unit 101 into three streams containing the systematic bit stream (SYS) and two parity bit streams (P1, P2) generated by the Turbo encoder before input to the 1^{st} stage 102 of the rate matching. The 1^{st} rate matching stage 102 then matches the number of input bits to the size of the virtual IR buffer 103 *(N*_{*HARQ*} bits), which is defined by higher layers and is related to the buffer size available for the respective hybrid ARQ process in the receiver (mobile station). The number of bits the virtual IR buffer at the transmitter can store matches the number of bits the virtual IR buffer at the receiver can store. Note, that the absolute buffer sizes at transmitter and receiver are different. The transmitter stores hard-valued bits [0,1], which require one memory bit per code bit. The receiver stores soft-bits, for which usually 6-8 memory bits per code bit are used (implementation dependent). A soft-bit is a metric representing the probability of a received/demodulated bit being a one or a zero. Typically, log-likelihood-ratios (LLRs) are used for the soft-bit representation, however other metrics are also possible. Note that only the parity bits P1 and P2 are rate matched and the 1^{st} rate matching is transparent for the systematic bits.

The 2^{nd} rate matching stage 104 matches the number of bits after 1^{st} rate matching stage 102 i.e. the number of bits of the virtual IR buffer 103 to the number of physical channel bits *N*_{*data*} available in the TTI and output from bit collection unit 105. This is necessary since AMC is employed and *N*_{*data*} can vary from transmission to transmission depending on the current channel quality for the respective link.

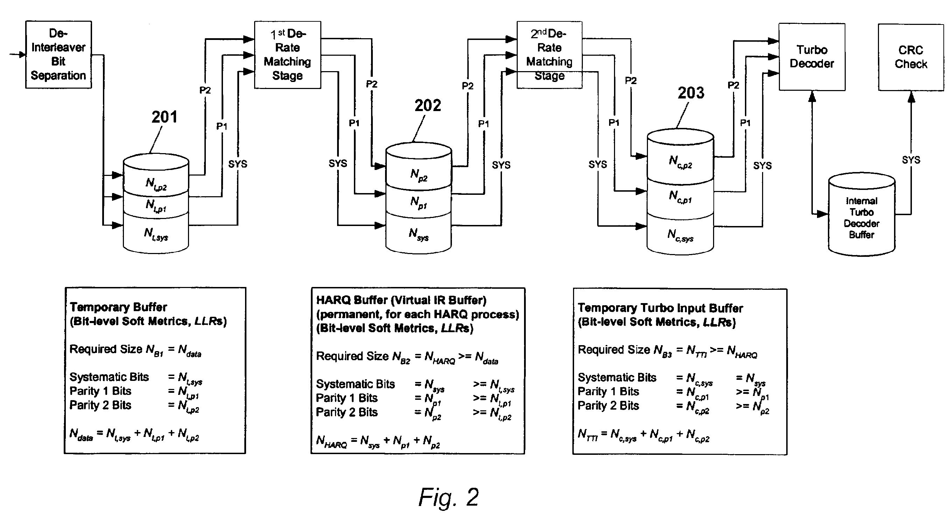

A conventional HSDPA receiver implementation is described in the following in greater detail with reference to Figure 2 including several details regarding the SYS, P1 and P2 bit streams. In the receiver chain several buffers are required to perform appropriate processing of the received data, which is typically processed bit-wise using soft-bits.

The output of the de-interleaver is stored in a temporary buffer 201 using a bit separation unit in order to identify the systematic SYS, parity P1 and parity P2 bit streams. Buffer 201 needs to be capable of storing at least *N*_{*data*} soft-bits. Then the 1 st de-rate matching is performed and the soft bits output form the de-rate matching stage 201 are combined with the content of buffer 202, which is the virtual IR buffer (HARQ buffer). Note that combining is only necessary if a retransmission is received. As shown in the figure, a depuncturing (and combining) of a currently received block of size *N*_{*data*} to HARQ process block of size *N*_{*HARQ*} is performed. Each stream (SYS, P1, P2) is depunctured ("de-rate matched") individually.

The virtual IR buffer 202 holds *N*_{*HARQ*} soft-bits from earlier failed transmissions for hybrid ARQ combining. It will be flushed when the receiver decoded a packet correctly or the transmission of the previous packet has been aborted by any reason. In case of soft-bits, flushing is usually done setting the soft-bit values representing equal probability of zero and one. If dealing with LLRs this means setting the soft-bit values to zero. Thereafter, the 2nd de-rate matching is carried out in the 2^{nd} de-rate matching stage to generate *N*_{*TTI*} soft-bits for appropriate feeding of the Turbo decoder. These *N*_{*TTI*} soft-bits are stored in a temporary buffer 203.

In the second de-rate matching an HARQ block of size *N*_{*HARQ*} is depunctured to a full code block (rate 1/3) for straight Turbo decoding. Only bit streams P1 and P2 are depunctured whereas the de-rate matching stage is transparent to the SYS bits.

In contrast to buffer 201 and buffer 203, buffer 202 is not temporary and will be present as long as the hybrid ARQ process runs, since it needs to keep the soft-bits for combining with further retransmissions of a packet. Note, that several hybrid ARQ processes can run in parallel and the virtual IR buffer for each process can be configured differently.

Moreover, there might be a higher layer procedure which resets the hybrid ARQ processes.

Note that the drawings of the buffers 201-203 in the figure show logical buffer units and do not necessarily refer to the physical assignment/segmentation of the buffers in the receiver structure. A supervising buffer management unit in the receiver could be present to make efficient use of the overall available receiver buffer, bearing in mind that the buffer could be shared among a number of parallel hybrid ARQ processes.

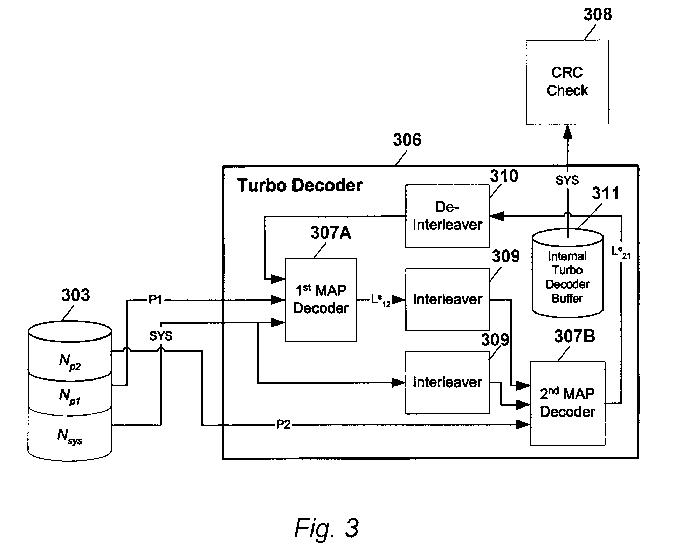

Figure 3 reveals some details of the turbo decoder shown in figure 2. The third buffer is indicated with 303 and corresponds to the buffer 203 in figure 2. The turbo decoder 306 comprises a first and second MAP decoder 307A, 307B, two interleaver units 309 and a de-interleaver unit 310. Further, an internal turbo decoder buffer 311 is provided, which outputs the soft bits to the CRC check unit 308.

The operation of the decoder is as follows. The decoder initially receives the stored soft bits of the data stream P1 at the first MAP decoder 307A. In addition, the systematic bits SYS are also fed into this decoder and through interleaver 309 in the second MAP decoder 307B. The two decoders could physically be the same processing block. The output Le₁₂ of the first MAP decoder is applied through interleaver 309 to the second MAP decoder 307B. As its third input, this decoder receives the parity bits of data stream P2 from buffer 303. The output Le₂₁ of the second MAP decoder 307B is applied to the de-interleaver 310 and fed back to the input of the first MAP decoder 307A.

The decoder works with a plurality of iterations, thereby improving the performance of the decoder until reliable data bits are obtained, which are stored in the internal turbo decoder buffer 311. The result is then checked by the CRC check unit 308 for correctness. It is noted that during each iteration the turbo decoder 306 accesses the momentarily stored data bits from the buffer 303 which stores the result of the output from the second de-rate matching stage.

As an implementation variant the turbo decoder accesses the systematic bits from buffer 303 only at the first iteration step (during iterations the information of the systematic bits is stored jointly with L^{e}₁₂/L^{e}₂₁).

The complexity of network units of a communication system has a major impact on the cost of the units. This is especially true for the mobile station, because of its compact size and limited battery lifetime. The complexity is, aside from the processing capability, predominantly defined by the required buffer sizes, especially on the downlink, where the mobile station acts as a receiver as in HSDPA and buffers soft-bits for hybrid ARQ.

Therefore, a reduction of the required buffer size is desirable.

The object is solved by a method of buffering data at the receiver of a packet transmission communication system as set forth in claims 1 and 8.

The idea underlying the invention is to jointly perform the second de-rate matching and the iterative decoding operation. As a result, the buffer conventionally needed upon completion of the second de-rate matching operation can be completely omitted, since the de-rate matching operation is included in the iterative decoding process.

Note, that the invention can be applied to various implementation variants of the iterative (turbo) decoder.

Preferred embodiments of the method and receiver are subject to various dependent claims. According to a preferred embodiment, only the parity bit streams need to be de-rate matched at this stage and the systematic bits can be directly fed from the HARQ buffer into the decoder.

The invention will be described in the following with reference to the accompanying drawings, which show:
- **Figure 1**: a conventional transmitter implementation of AMC and hybrid ARQ functionality in HSDPA;
- **Figure 2**: a conventional receiver implementation of AMC and hybrid ARQ functionality in HSPDA;
- **Figure 3**: details of the turbo decoder shown in Figure 2; and
- **Figure 4**: a receiver implementation of AMC and hybrid ARQ functionality in HSPDA for illustrating the buffer saving compared to the implementation shown in Figure 2.

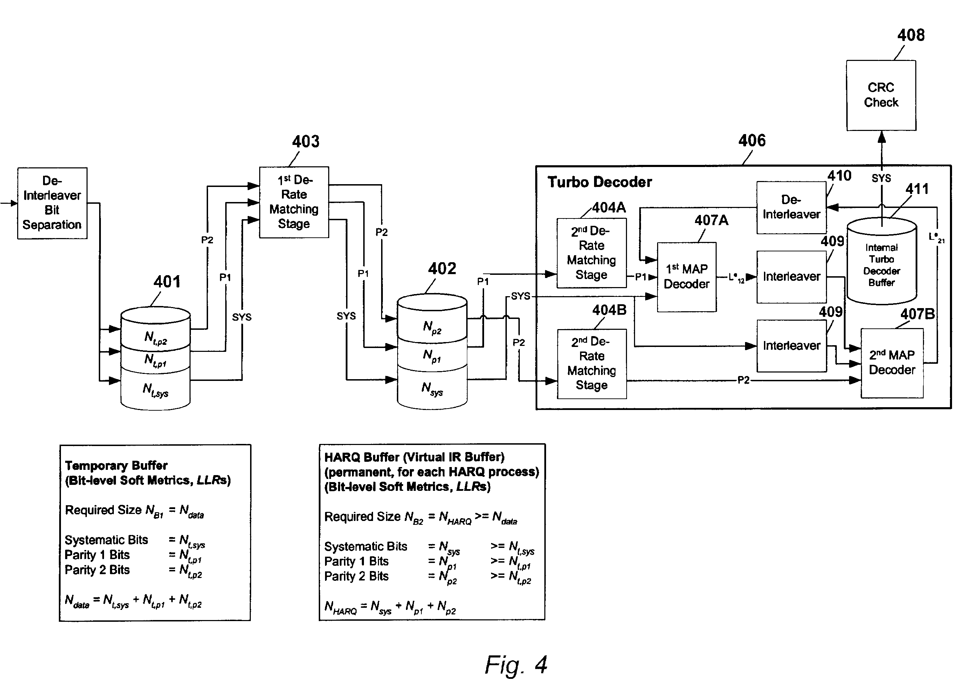

Figure 4 shows a receiver implementation for obtaining a reduction of the required buffer size.

An incoming data bit stream is first de-interleaved and separated into a systematic bit substream SYS and two parity bit substreams P1, P2. In buffer 401, the output of the de-interleaver/bit-separation unit is temporarily stored before being applied to the first de-rate matching stage 403. Subsequently, the data bit substreams are applied to HARQ (virtual IR) buffer 402.

The turbo decoder essentially comprises all components, which are shown in figure 3. Moreover, turbo decoder comprises two de-rate matching stages 404A, 404B shown as logically separated units. The de-rate matching operation could also be performed in one processing block. To each de-rate matching stage, the respective parity bit stream P1, P2 is applied as output from the HARQ buffer 402. As shown, the systematic bit stream SYS is directly applied to the first MAP decoder 407A.

Further, the turbo decoder 406 comprises a second MAP decoder 407B interleaver units 409, a de-interleaver unit 410 and an internal turbo decoder buffer 411.

The operation of the turbo decoder including the de-rate matching operation is as follows.

The decoder works with a plurality of iterations, where the probability for correct decoding increases with the number of iterations. Generally, one full-iteration is referred to as performing a 1^{st} and a 2^{nd} MAP decoding step. A half-iteration is referred to as performing one of the MAP decoding steps. In typical implementation variants after each half-iteration either the changed soft-values of the systematic bits, L^{e}₁₂/L^{e}₂₁ or a soft metric representing a combination of both are stored in the internal turbo decoder buffer. However, this is turbo decoder implementation dependent.

After a usually predefined number of full-iterations (typically 6-8) the changed soft-values of the systematic bits - caused by the turbo decoding process - are stored in the internal turbo decoder buffer and forwarded to the CRC check unit.

In more sophisticated implementation variants the changed soft-values of the systematic bits are stored in the internal turbo decoder buffer after each half- or full-iteration. This provides the possibility to perform a CRC check after each half- or full-iteration and, hence, to terminate the decoding process at an early state in case the CRC check does not fail.

Note, that generally the decoding process can also start with the 2^{nd} MAP decoder, i.e. in a full-iteration first the 2^{nd} MAP decoding and afterwards the 1^{st} MAP decoding is performed.

During each iteration, the first map decoder 407A receives the parity bit stream P1, the systematic bit stream SYS from buffer 402 (depending on implementation variant, possibly only in the 1^{st} iteration) and the output from de-interleaver 410 (except in the 1^{st} iteration). For each iteration step, the parity bit stream P1 is output from the second buffer 402 and a de-rate matching operation is performed by the respective stage 404A. The second MAP decoder 407 B receives at each iteration step, the output L^{e}₁₂ from the first MAP decoder through interleaver 409 as well as the SYS bit stream and the parity bit stream P2 as output from the second de-rate matching stage 404B, which accesses the data bits stored in buffer 402.

The output L^{e}₂₁ of the second MAP decoder 407B is applied to the de-interleaver 410 and fed to the first MAP decoder 407A as described above with reference to figure 3. Note that the essential difference in the operation of the turbo decoder shown in figure 4 is the fact that the de-rate matching operation is repeatedly (during decoder iterations) performed under access to the parity data bits stored in buffer 402. Although this comes at the expense of an increased processing complexity, a significant reduction in required buffer size can be obtained as the third buffer conventionally included after the second de-rate matching operation can be completely omitted. Hence, the second stage de-rate matching operation needs to be executed for each decoder iteration, whereas in a conventional implementation, the second stage de-rate matching operation needs to be executed only once and the result is stored in a buffer.

Since the second de-rate matching operation is not applied on the systematic bit stream SYS the turbo decoder 406 may access the SYS bits directly from the virtual IR buffer 402. Note that in this case, the access speed requirement for the buffer 402 is stricter since the turbo decoder needs to have fast access during iterations.

The required size for the buffers is shown in the figures. More specifically, it is apparent that temporary buffer 401 should be capable for storing *N*_{*data*} soft bits. Finally, the turbo decoder 306 comprises an internal turbo decoder buffer from which the systematic bits are applied to a CRC check unit 408.

The disclosed approach helps to reduce the required buffer size at the receiver by including the 2^{nd} de-rate matching step into the iterative decoder. Since for the considered ARQ Type II/III schemes soft-bits need to be stored in the receiver, the disclosed implementation is particularly advantageous. This approach is especially of interest for the 3GPP High Speed Downlink Packet Access (HSDPA) technique, where the mobile station acts as a receiver and its complexity is significantly influenced by the required buffer sizes.

Note that in the description above only significant buffers are mentioned. It is common understanding that processing units generally include small buffer units for storing temporary needed information. Moreover, it is clear that the above described turbo decoder serves to exemplarily illustrate the subject matter of the invention. Variations of the iterative decoder are readily apparent to those skilled in the art, for example, it does not necessarily have to be a turbo decoder. In this case, it could be sufficient to process one parity bit stream.

## Claims

1. A method of buffering data at the receiver of a packet transmission communication system employing hybrid ARQ type II/III and adaptive coding and modulation schemes, wherein the adaptive coding is performed by a two-stage matching algorithm comprising the steps of:
receiving a data bit stream;
storing the data bit stream in a first buffer;
performing a first de-rate matching operation on the data bits stored in the first buffer;
combining the data bits stored in the first buffer with the data bits from an earlier transmission and storing the combined data bits in a second buffer;
performing a second de-rate matching operation on the combined data bits stored in the second buffer; and
performing a plurality of iterative decoding steps on the data bits obtained from the second de-rate matching operation.
whereby during each iteration the data bits stored in the second buffer are accessed and undergo the second de-rate matching operation.

2. The method according to claim 1, further comprising the steps of separating the data stream into a plurality of data bit streams prior to the steps of storing and de-rate matching.

3. The method according to claim 2, wherein the data bit stream is separated in at least one parity bit stream and at least one systematic bit stream.

4. The method according to claim 3, wherein the parity bit stream undergo the second de-rate matching operation whereas the systematic bit stream does not undergo the second de-rate matching operation prior to performing the plurality of iterative decoding steps.

5. The method according to one of claims 1 to 4, further comprising the step of deinterleaving the received data bit stream prior to the steps of storing and de-rate matching.

6. The method according to one of claims 1 to 5, wherein the de-rate matching operation is a de-puncturing operation.

7. The method according to one of claims 1 to 6, wherein the data is transmitted in the communication system employing a high speed downlink packet access frequency division duplex mode or time division duplex mode.

8. A receiver of a packet transmission communication system employing hybrid ARQ type II/III and adaptive coding and modulation schemes, wherein the adaptive coding is performed by a two stage rate matching algorithm, comprising:
a first buffer (401) for storing a received data bit stream;
a first de-rate matching entity (403) for performing a de-rate matching operation on the data bits stored in the first buffer (401);
a second buffer for (402) combining the bits output from the first de-rate matching entity (403) with from earlier transmissions and storing the combined bits;
a second de-rate matching entity (404A, 404B) for performing a de-rate matching operation on the combined data bits stored in the second buffer (402); and
a decoder adapted to perform a plurality of iterative decoding steps on the bits of output from the second de-rate matching entity, such that during each iteration the data bits stored in the second buffer are accessed and undergo a second de-rate matching operation.

9. The receiver according to claim 8, further comprising a decoder (406) comprising an internal decoder buffer.

10. The receiver according to claim 8 or 9 wherein the first buffer (401) is a temporary buffer and the second buffer (402) is a permanent HARQ buffer.

11. The receiver according to one of claims 8 to 10, wherein the iterative decoder is a turbo decoder.
